# EUROPÄISCHE PATENTSCHRIFT

(11) **EP 1 844 217 B1**
(45) Veröffentlichungstag und Bekanntmachung des Hinweises auf die Patenterteilung: **12.08.2009**
(21) Anmeldenummer: 06706324.8
(22) Anmeldetag: 20.01.2006
(51) Int. Cl.: F01L 3/02, B23P 15/00, B21K 1/22, B22F 7/00

(54) **VENTIL ZUR STEUERUNG DES GASAUSTAUSCHS, INSBESONDERE BEI VERBRENNUNGSMOTOREN**
VALVE FOR CONTROLLING GAS EXCHANGE, ESPECIALLY IN INTERNAL COMBUSTION ENGINES
SOUPAPE DE REGULATION DE L'ECHANGE GAZEUX, EN PARTICULIER DANS DES MOTEURS A COMBUSTION

(30) Priorität: 03.02.2005 DE 102005005041
(43) Veröffentlichungstag der Anmeldung: 17.10.2007
(73) Patentinhaber: Märkisches Werk GmbH, 58553 Halver (DE)
(72) Erfinder: HIRNSCHAL, Udo, 58553 Halver (DE)
(74) Vertreter: Grättinger Möhring von Poschinger Patentanwälte Partnerschaft
(86) Internationale Anmeldenummer: PCT/EP2006/000485
(87) Internationale Veröffentlichungsnummer: WO 2006/081951

(56) Entgegenhaltungen:
- EP-A- 0 911 493
- US-A- 3 701 342
- US-A- 4 406 046
- PATENT ABSTRACTS OF JAPAN Bd. 008, Nr. 028 (M-274), 7. Februar 1984 (1984-02-07) & JP 58 185917 A (YANMAR DIESEL KK), 29. Oktober 1983 (1983-10-29)
- PATENT ABSTRACTS OF JAPAN Bd. 008, Nr. 253 (M-339), 20. November 1984 (1984-11-20) & JP 59 128908 A (MITSUBISHI JUKOGYO KK), 25. Juli 1984 (1984-07-25)
- PATENT ABSTRACTS OF JAPAN Bd. 2003, Nr. 12, 5. Dezember 2003 (2003-12-05) & JP 2005 048635 A (MITSUBISHI MOTORS CORP), 24. Februar 2005 (2005-02-24)

## Beschreibung

Die Erfindung betrifft ein Ventil gemäß dem Oberbegriff von Patentanspruch 1.

Derartige Ventile sind aus der EP 0911493 A2 bekannt. Dort ist bei einem gattungsgemäßen Ventil mit hohlem Ventilschaft im Bereich des Schaftendes ein das Schaftende aussteifender Stopfen vorgesehen, welcher aus einem Metallschaum besteht und durch eine von einer Nut gebildeten Deformation im Schaftende an seiner Position gehalten wird.

Im Allgemeinen werden Ventile, bei denen Ventilschaft und/oder Ventilkonus als Hohlteile aus Metall ausgebildet sind, bevorzugt als Leichtbauventile, wie auch in der deutschen Offenlegungsschrift DE 19804053 beschrieben, eingesetzt. Dabei bilden Ventilkegel und Ventilverschlußstopfen gemeinsam einen Hohlraum; die Wandstärken dieser Hohlteile werden aus Gewichtsgründen derart gewählt, dass sie unter einem Drittel des Schaftdurchmessers liegen. Um dennoch eine hinreichende Festigkeit zu gewährleisten, ist bei dem bekannten Leichtbauventil der Ventilverschlußstopfen in einem radial innenliegenden Bereich gegen den Ventilschaft abgestützt und der Ventilkonus ist mit seinem oberen Ende an der Außenseite des Schaftes fixiert. Durch diese bekannte Bauform gelingt es, die Verformungssteifigkeit des Ventilkopfs gegenüber Ventilen zu verbessern, bei denen ein hohler Ventilschaft einstückig mit dem Ventilkonus ausgebildet ist. Um auch allen Festigkeitsanforderungen unter Zündbedingungen im Motor zu genügen, ist es bei den bekannten Leichtbauventilen erforderlich, teure härtbare Werkstoffe mit hoher Temperaturbeständigkeit einzusetzen.

Demgegenüber besteht die Aufgabe der vorliegenden Erfindung darin, Ventile der eingangs genannten Art mit niedrigem Gewicht zu schaffen, die kostengünstiger herstellbar sind und im übrigen den Anforderungen bei schnellaufenden Maschinen, insbesondere Verbrennungsmotoren, genügen. Wegen der Gefahr hoher Schwingungsbelastungen bei derart hochtourigen Motoren wird auf die Erreichung guter Dämpfungseigenschaften besonderer Wert gelegt, wobei gleichzeitig zur Gewichtseinsparung minimale Wanddicken zu verwirklichen sind.

Diese Aufgabe wird an einem Ventil der eingangs genannten Art gemäß dem Kennzeichen von Patentanspruch 1 gelöst. Dadurch dass die ventilbildenden Hohlteile ganz oder teilweise mit Metallschaum gefüllt sind, ergibt sich eine hohe Aussteifungswirkung, so dass an dünnen Wandstärken der das Ventil bildenden Hohlteile festgehalten werden kann. Sowohl für die Erzielung hoher Festigkeitswerte als auch guter Dämpfungseigenschaften ist von wesentlicher Bedeutung, dass die Ventil bildenden Hohlteile ganzflächig metallisch molekular mit dem Metallschaum verbunden sind.

Als Metallschaum kommt sowohl eine Ausführungsform mit geschlossenen als auch mit offenen Poren in Frage. Während der geschlossenporige Metallschaum eine höhere Festigkeit bietet, z.B. wenn die einzelnen Zellen im wesentlichen kugelförmig gestaltet sind, besteht ein besonderer Vorteil der offenporigen Ausführungsform darin, dass eine Kühlmittelfüllung, z. B. auf Natriumbasis, möglich ist.

Eine zweckmäßige Ausführungsform besteht darin, dass der Metallschaum zwischen 5 und 20 Vol.%, bevorzugt etwa 8 bis 10 Vol.% als Metallmatrix aufweist. Geeignete Materialien hierfür sind Alu-, Zn-, Fe-Schäume oder dergleichen, wobei bevorzugt eine Metallmatrix auf AlSi7-Basis in Frage kommt.

Um den Anforderungen an ein niedriges Ventilgewicht zu genügen, ist als mittlere Dichte des Metallschaums etwa 0,5 g/cm³ anzustreben. Bei einem AlSi7-Schaum bedeutet dies Werte für den E-Modul von ca. 50 GPa bei einer Festigkeit von 185 MPa.

Als geeignetes Ausgangsmaterial für den Metallschaum kann eine Pulvermischung derart gewählt werden, dass ein Blähmittel unter Temperatureinwirkung ein Schaumvolumen von etwa dem Fünffachen des Ausgangsmaterials erzeugt.

Vorteilhaft wird der gesamte Hohlkörper von Ventilschaft und Ventilkopf vollständig mit Metallschaum ausgefüllt. Nach einem vorteilhaften Verfahren hierzu ist vorgesehen, dass das Einbringen des Ausgangsmaterials für den Metallschaum durch ein offenes Ende des Ventilschafts erfolgt, dass der Metallschaum unter Temperatureinwirkung den Ventilhohlraum vollständig ausfüllt und seine Menge bis zum Überquellen über das Einfüllende bemessen wird, wonach die Übermenge des Metallschaums entfernt und die Einfüllöffnung durch Schweißen verschlossen wird.

Es kommt also eine beliebige Quellrichtung bei der Ausbreitung des Metallschaums in Frage, zum Beispiel durch eine Öffnung am Schaftende des Ventilschafts in Richtung Ventilkopf oder durch Einfüllen des Quellpulvers durch eine Öffnung des Ventilbodens z. B. bei abgenommenem Ventilverschlußstopfen, so dass das Pulver gegen das geschlossene Schaftende fließt. Nach dem Einfüllen wird das Pulver unter Temperatureinwirkung ausgeschäumt bis es im Sinne des oben genannten Verfahrensvorschlags über die vorhandene Einfüllöffnung hinausquillt. Die Temperatur ist so zu wählen, dass es zu einer festen Anbindung des Metallschaums an die Innenfläche des Ventilhohlkörpers kommt.

Um teure Materialien einsparen zu können, schlägt die Erfindung weiterhin vor, dass die Ventil bildende Metallhülle aus mehreren Abschnitten zusammengeschweißt ist, welche aus gleichen oder unterschiedlichen Werkstoffen bestehen können.

Eine vorteilhafte Ausführungsform besteht darin, dass der Ventilkopf aus einem mit dem Ventilschaft einteiligen Ventilkonus und einem Ventilverschlußstopfen besteht, welche durch Elektroschweißen miteinander verbunden sind. Dabei kann es zweckmäßig sein, dass der Ventilschaft aus einem ventilkopfseitigen Abschnitt aus Nimonic80A besteht, sowie einem das Schaftende des Ventils umfassenden Endabschnitt aus härtbarem Werkstoff, wobei beide Abschnitte durch Reibschweißen miteinander verbunden sind. Der Endabschnitt, welcher möglichst kurz zu halten ist, besteht üblicherweise aus X45CrSi93 (DIN 1.4718).

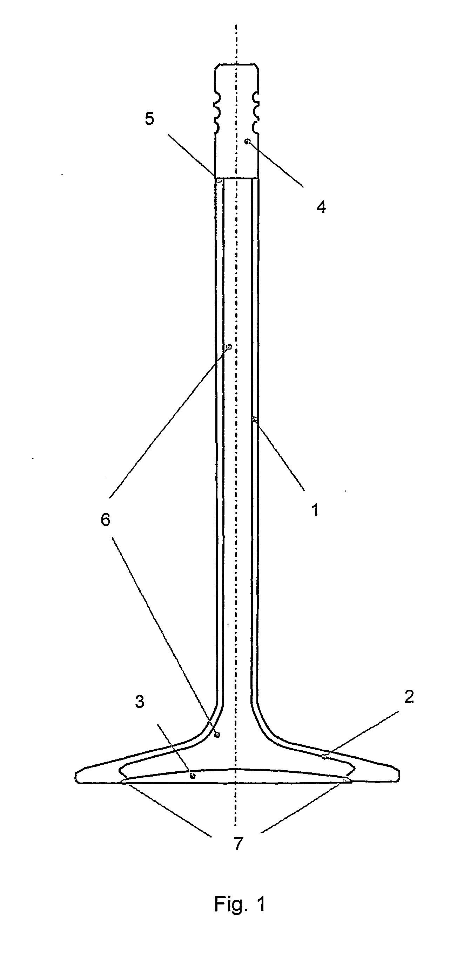

Im folgenden wird ein Ausführungsbeispiel der Erfindung anhand der Zeichnung erläutert. Die Zeichnung zeigt ein Ventil im Längsschnitt bestehend aus einem hohlen Ventilschaft 1, einem daran angeformten Ventilkonus 2, einem mit dem Ventilkonus 2 am Außenumfang mittels einer Schweißnaht 7 durch Elektroschweißen verbundenen Ventilverschlußstopfen 3, sowie am anderen Ende des Ventilschafts 1 einem Schaftende 4. Man erkennt dass das massive Schaftende 4 mittels einer Schweißnaht 5 mit dem hohlen Ventilschaft 1 verbunden ist, wobei hierfür eine Reibschweißung vorgesehen ist. Der gesamte Ventilhohlraum ist ausgefüllt mit einem Metallschaumkörper 6, wobei der Metallschaum an seinen Grenzflächen mit dem Ventilhohlkörper eine molekulare Verbindung im Sinne einer monolithischen Struktur eingeht.

## Patentansprüche

1. Ventil zur Steuerung des Gasaustauschs, insbesondere bei Verbrennungsmotoren, welches an einem Ventilschaft (1) einerseits ein Schaftende (4) andererseits einen Ventilkopf (2) aufweist, wobei Ventilkopf (2) und/oder Ventilschaft (1) als Hohlteile aus Metall ausgebildet sind, deren Hohlraum wenigstens teilweise mit Metallschaum gefüllt ist,
**dadurch gekennzeichnet,**
**dass** der Metallschaum mit den das Ventil bildenden Hohlteilen an ihren Grenzflächen metallisch molekular verbunden ist.

2. Ventil nach Anspruch 1,
**dadurch gekennzeichnet,**
**dass** der Metallschaum geschlossen- oder offenporig verarbeitet ist.

3. Ventil nach Anspruch 1,
**dadurch gekennzeichnet,**
**dass** der Metallschaum zwischen 5 und 20 Volumenprozent aus Metallmatrix besteht.

4. Ventil nach Anspruch 3,
**dadurch gekennzeichnet,**
**dass** der Metallschaum etwa 8 bis 10 Vol.% aus Metallmatrix besteht.

5. Ventil nach Anspruch 1,
**dadurch gekennzeichnet,**
**dass** der Metallschaum durch eine Metallmatrix auf AlSi7-Basis gebildet ist.

6. Ventil nach Anspruch 5,
**dadurch gekennzeichnet,**
**dass** die mittlere Dichte des Metallschaums etwa 0,5 g/cm³ beträgt.

7. Ventil nach Anspruch 5,
**dadurch gekennzeichnet,**
**dass** als Ausgangsmaterial für den Metallschaum eine Pulvermischung derart gewählt wird, dass ein Blähmittel unter Temperatureinwirkung ein Schaumvolumen von etwa dem Fünffachen des Ausgangsmaterials erzeugt.

8. Ventil nach Anspruch 1,
**dadurch gekennzeichnet,**
**dass** Ventilschaft (1) und Ventilkopf vollständig mit Metallschaum ausgefüllt sind.

9. Ventil nach Anspruch 1,
**dadurch gekennzeichnet,**
**dass** die Ventil bildende Metallhülle aus mehreren Abschnitten zusammengeschweißt ist, welche aus gleichen oder unterschiedlichen Werkstoffen bestehen.

10. Ventil nach Anspruch 9,
**dadurch gekennzeichnet,**
**dass** der Ventilkopf aus einem mit dem Ventilschaft (1) einteiligen Ventilkonus (2) und einem Ventilverschlußstopfen (3) besteht, welche durch Elektroschweißen miteinander verbunden sind.

11. Ventil nach Anspruch 9,
**dadurch gekennzeichnet,**
**dass** der Ventilschaft (1) aus einem ventilkopfseitigen Abschnitt aus Nimonic80A und einem das Schaftende des Ventils umfassenden Endabschnitt aus härtbarem Werkstoff zusammengesetzt ist, die durch Reibschweißen miteinander verbunden sind.

12. Ventil nach Anspruch 11,
**dadurch gekennzeichnet,**
**dass** der Endabschnitt aus X45CrSi93 (DIN 1.4718) besteht.

13. Verfahren zur Herstellung eines Ventils nach Anspruch 1 und/oder weiteren der verstehenden Unteransprüche,
**dadurch gekennzeichnet,**
**dass** das Einbringen des Ausgangsmaterials für den Metallschaum durch ein offenes Ende des Ventilschafts (1) erfolgt, dass der Metallschaum unter Temperatureinwirkung den Ventilhohlraum vollständig ausfüllt und seine Menge bis zum Überquellen über das Einfüllende bemessen wird, wonach die Übermenge des Metallschaums entfernt und die Einfüllöffnung durch Schweißen verschlossen wird.

## Claims

1. Valve for controlling gas exchange, in particular in internal combustion engines, which has at one end of a valve shaft (1) a shaft end (4) and at the other end has a valve head (2), wherein the valve head (2) and/or valve shaft (1) are configured as hollow parts consisting of metal, the cavity of which is at least partially filled with metal foam,
**characterised in that**
the metal foam is connected in a metallic, molecular manner to the hollow parts which form the valve at their interfaces.

2. Valve according to Claim 1,
**characterised in that**
the metal foam is processed to have closed or open pores.

3. Valve according to Claim 1,
**characterised in that**
between 5 and 20 per cent by volume of the metal foam consist of a metal matrix.

4. Valve according to Claim 3,
**characterised in that**
approximately 8 to 10 per cent by volume of the metal foam consist of a metal matrix.

5. Valve according to Claim 1,
**characterised in that**
the metal foam is formed by a metal matrix based on AlSi7.

6. Valve according to Claim 5,
**characterised in that**
the average density of the metal foam is approximately 0.5 g/cm³.

7. Valve according to Claim 5,
**characterised in that**
a powder mixture is selected as the starting material for the metal foam, in such a manner that a blowing agent produces a foam volume of approximately five times the starting material under the effect of temperature.

8. Valve according to Claim 1,
**characterised in that**
the valve shaft (1) and valve head are completely filled with metal foam.

9. Valve according to Claim 1,
**characterised in that**
the metal shell which forms the valve is welded together from a plurality of sections which consist of the same or different materials.

10. Valve according to Claim 9,
**characterised in that**
the valve head consists of a valve cone (2), which is integral with the valve shaft (1), and a valve plug (3), which are connected to each other by arc welding.

11. Valve according to Claim 9,
**characterised in that**
the valve shaft (1) is composed of a valve head side section consisting of Nimonic80A and an end section which comprises the shaft end of the valve and consists of a curable material, which are connected to each other by friction welding.

12. Valve according to Claim 11,
**characterised in that**
the end section consists of X45CrSi93 (DIN 1.4718).

13. Method for producing a valve according to Claim 1 and/or other preceding subclaims,
**characterised in that**
the starting material for the metal foam is introduced through an open end of the valve shaft (1), that the metal foam completely fills the valve cavity under the effect of temperature and its quantity is dimensioned to overflow the filling end, after which the excess metal foam is removed and the filling opening is closed by welding.

## Revendications

1. Soupape pour la commande de l'échange de gaz, en particulier sur des moteurs à combustion, qui comporte sur une tige de soupape (1) d'une part une extrémité de tige (4) et d'autre part une tête de soupape (2), la tête de soupape (2) et/ou la tige de soupape (1) étant réalisées sous forme de parties creuses en métal, dont la cavité est remplie au moins en partie avec de la mousse de métal,
**caractérisée en ce que**
la mousse de métal est reliée aux parties creuses formant la soupape sur leurs surfaces limites au niveau des molécules de métal.

2. Soupape selon la revendication 1,
**caractérisée en ce que**
la mousse de métal est traitée avec des pores ouverts ou des pores fermés.

3. Soupape selon la revendication 1,
**caractérisée en ce que**
la mousse de métal est constituée entre 5 et 20 pour-cent en volume de la matrice de métal.

4. Soupape selon la revendication 3,
**caractérisée en ce que**
la mousse de métal représente environ 8 à 10 pour-cent en volume de la matrice de métal.

5. Soupape selon la revendication 1,
**caractérisée en ce que**
la mousse de métal est formée par une matrice de métal à base de AlSi7.

6. Soupape selon la revendication 5,
**caractérisée en ce que**
la densité moyenne de la mousse de métal représente environ 0,5 g/cm³.

7. Soupape selon la revendication 5,
**caractérisée en ce que**
on choisit comme matériau de départ pour la mousse de métal un mélange de poudre de telle sorte qu'un agent gonflant génère sous l'effet de la température un volume de mousse représentant environ le cinquième du matériau de départ.

8. Soupape selon la revendication 1,
**caractérisée en ce que**
la tige de soupape (1) et la tête de soupape sont remplies complètement de mousse de métal.

9. Soupape selon la revendication 1,
**caractérisée en ce que**
l'enveloppe métallique formant la soupape est soudée à partir de plusieurs parties qui sont constituées de matériaux identiques ou de matériaux différents.

10. Soupape selon la revendication 9,
**caractérisée en ce que**
la tête de soupape comprend un cône de soupape (2) formée d'une seule pièce avec la tige de soupape (1) et un bouchon de fermeture de soupape (3), lesquels sont reliés entre eux par soudage électrique.

11. Soupape selon la revendication 9,
**caractérisée en ce que**
la tige de soupape (1) est constituée d'une partie côté tête de soupape à base de Nimonic80A et d'une partie d'extrémité comprenant l'extrémité de tige de la soupape à base de matériau durcissable, lesquelles sont reliées entre elles par soudage par friction.

12. Soupape selon la revendication 11,
**caractérisée en ce que**
la partie d'extrémité est à base de X45CrSi93 (DIN 1.4718).

13. Procédé pour la fabrication d'une soupape selon la revendication 1 et/ou d'autres des sous-revendications précédentes,
**caractérisé en ce que**
l'introduction du matériau de base pour la mousse de métal est effectuée par une extrémité ouverte de la tige de soupape (1), **en ce que** la mousse de métal remplit complètement la cavité de soupape sous l'effet de la température et sa quantité est dimensionnée jusqu'au sur-gonflement par l'extrémité de remplissage, après quoi la sur-quantité de la mousse de métal est enlevée et l'orifice d'introduction est fermé par soudage.
